(19) Europäisches Patentamt
European Patent Office
Office européen des brevets

(11) **EP 4 252 997 B1**

(12) **EUROPEAN PATENT SPECIFICATION**

(45) Date of publication and mention
of the grant of the patent:
**04.12.2024 Bulletin 2024/49**

(51) International Patent Classification (IPC):
***B29C 44/50*** *(2006.01)*     ***B29C 48/00*** *(2019.01)*

(21) Application number: **23162840.5**

(52) Cooperative Patent Classification (CPC):
**B29C 44/50; B29C 48/0012; B29C 48/32;**
**B29C 48/92;** B29C 2948/92514; B29C 2948/92904

(22) Date of filing: **20.03.2023**

(54) **RESIN FOAM PRODUCTION APPARATUS AND METHOD OF PRODUCING RESIN FOAM**

VORRICHTUNG ZUR HERSTELLUNG VON HARZSCHAUM UND VERFAHREN ZUR
HERSTELLUNG VON HARZSCHAUM

APPAREIL DE PRODUCTION DE MOUSSE DE RÉSINE ET PROCÉDÉ DE PRODUCTION DE
MOUSSE DE RÉSINE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **22.03.2022 JP 2022045977**
            **30.11.2022 JP 2022192349**

(43) Date of publication of application:
**04.10.2023 Bulletin 2023/40**

(73) Proprietor: **Ricoh Company, Ltd.**
**Tokyo 143-8555 (JP)**

(72) Inventors:
• **HANATANI, Shinya**
**Tokyo, 143-8555 (JP)**

• **TANAKA, Takashi**
**Tokyo, 143-8555 (JP)**

(74) Representative: **SSM Sandmair**
**Patentanwälte Rechtsanwalt**
**Partnerschaft mbB**
**Joseph-Wild-Straße 20**
**81829 München (DE)**

(56) References cited:
**WO-A1-2020/134041**     **JP-A- 2002 201 301**
**JP-A- 2006 224 628**     **US-A1- 2002 036 363**
**US-A1- 2022 088 840**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

Technical Field

The present disclosure relates to a resin foam production apparatus and a method of producing a resin foam.

Related Art

Several resin foam production apparatuses have been conventionally known to produce a resin foam by feeding into a metal mold a resin foamable composition containing at least one type of resin, and passing the composition through a discharge opening of the metal mold.

Japanese Patent No. 5123021 describes a method of producing a polypropylene-based resin foam having particularly good surface smoothness and heat resistance, and further, good flexibility, compression recovery, cushioning properties, heat insulation properties, environmental adaptability, mechanical-physical characteristics; and a resin foam production apparatus having a purpose of providing a polypropylene-based resin foam derived by the method. Such method and apparatus produce a foam by feeding into an extruder a thermoplastic resin composition specified in the following item 1, melt-kneading the composition in presence of a foaming agent, and then extruding and forming the composition at a discharge velocity specified in the following item 2:

1. a thermoplastic resin composition having a melt flaw rate of 0.2-5 g/10 min and containing 100 parts by mass of a polypropylene-based resin, 10-100 parts by mass of a thermoplastic elastomer, and a cell nucleating agent; and
2. a resin discharge velocity V of 50-300 kg/cm$^2$. hr at a resin outlet of a metal mold attached at the tip of the extruder.

US2002/036363 A1 and JP2002 201301 A describe further resin foam production apparatus and methods.

SUMMARY

The present invention has an object to prevent generation of a corrugated wrinkle and restrain surface roughness.

To solve the aforementioned problem, embodiments of the present invention provides a resin foam production apparatus according to claim 1 and a method according to claim 7.

According to embodiments of the present invention, generation of a corrugated wrinkle is prevented and surface roughness is restrained.

BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:

FIG. 1 is a schematic diagram of a resin foam production apparatus according to an embodiment of the present invention.
FIG. 2 is a schematic diagram of a kneading device to produce a master batch.
FIGs. 3A and 3B are enlarged cross-sectional view of a principal part of a die.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

First, description will be made for a method of producing a resin foam sheet that is a resin foam.

(Production Method of Resin Foam Sheet)

A method of producing a resin foam sheet in the present embodiment includes a kneading process and a foaming process, and further includes other processes as appropriate.

The kneading process and the foaming process may be simultaneously or separately performed.

«Kneading Process»

The kneading process is a process of kneading a resin, and as appropriate, a filler. In the kneading process, a foaming agent may be added for promoting foaming more efficiently. A cross-linker, an antioxidant, a colorant, an absorbent for various light rays, a charging inhibitor, or an electrically conductive material can also be kneaded together depending on the application of a final shaped product. The kneading process can be performed in presence of a compressible fluid for more efficient promotion of foaming or more efficient kneading.

A resin, a filler, and a mixture generated in an intermediate process during production of a final shaped product may be referred to as a resin composition or a master batch.

<Resin>

Example of the resin described above and to be used can include, but are not limited to, styrene-based homopolymers such as polystyrene and poly-p-methylstyrene; styrene-based copolymers such as styrene-maleic anhydride copolymer, styrene-acrylonitrile copolymer, styrene-butadiene copolymer, styrene-acrylonitrile-butadiene copolymer, styrene-acrylic acid copolymer, and styrene-methacrylic acid copolymer; styrene-based resins such as a mixture of polystyrene and polyphenyleneoxide; and aliphatic polyester resins such as polylactic acid, polyglycol acid, poly(3-hydroxybutylate), poly(3-hydroxybutylate·3-hydroxyhexanoate), poly(3-hydroxybutylate·3-hydroxyvalerate), polycaprolactone, polybutylene succinate, and poly(butylene succinate·adipate).

Above all, preferable are aliphatic polyester resins, which are biodegradable resins to be biodegraded by microorganisms and environment-friendly polymeric materials providing low environmental load, and more preferable is polylactic acid, which is a particularly carbon-neutral material and relatively low in price. Inclusion of 90% by mass or more of polylactic acid allows provision of a biodegradable resin foam (foamed plastic).

<Filler>

The filler (hereinafter sometimes referred to as a "foam nucleating material") is contained for adjusting a state of foaming (size, amount and positions of bubbles) of a foam sheet or other characteristics, reducing cost, and improving strength, or other purposes.

Examples of the fillers include, but are not limited to, inorganic fillers and organic fillers. These can be used alone or in combination with two or more kinds.

Examples of the inorganic fillers include, but are not limited to, talc, kaolin, calcium carbonate, layered silicate, zinc carbonate, wollastonite, silica, alumina, magnesium oxide, calcium silicate, sodium aluminate, calcium aluminate, sodium alumino silicate, magnesium silicate, glass balloon, carbon black, zinc oxide, antimony trioxide, zeolite, hydrotalcite, metal fiber, metal whisker, ceramic whisker, potassium titanate, boron nitride, graphite, glass fiber, and carbon fiber.

Examples of the organic fillers include, but are not limited to, naturally occurring polymers such as starch, cellulose fine particles, wood powder, soybean curd refuse, rice husk and wheat bran, and modified products thereof, as well as a sorbitol compound, benzoic acid and a metal salt of the compound, a phosphate ester metal salt, and a rosin compound.

Above all, silica, which is an inorganic nucleating agent, is preferable owing to a high affinity with the compressible fluid described later. In use of a filler other than silica as a base, a filler surface treated with silica is preferable.

<Foaming Agent>

In terms of ease of obtaining a resin foam sheet having a high expansion ratio, examples of the foaming agent include, but are not limited to, a hydrocarbon e.g. lower alkanes such as propane, normal butane, isobutane, normal pentane, isopentane and hexane; ethers such as dimethyl ether; halogenated hydrocarbons such as methyl chloride and ethyl chloride; physical foaming agents such as a compressible gas of carbon dioxide, nitrogen or the like.

Above all, compressible gas of carbon dioxide, nitrogen or the like is preferably used in view of no odor, safe handling and low environmental load.

<Compressible Fluid>

Examples of substances that can be used as the compressible fluid include, but are not limited to, carbon monoxide, carbon dioxide, dinitrogen monoxide, nitrogen, methane, ethane, propane, 2,3-dimethylbutane, ethylene, and dimethyl ether. Above all, carbon dioxide is preferable in view of ease in creating a supercritical state owing to a critical pressure of about 7.4 MPa and a critical temperature of about 31 degrees C, and in view of non-flammability and thus good handleability. These compressible fluids can be used singly or in combination with two or more of kinds.

Solubility of the compressible fluid varies depending on combination of the resin and the compressible fluid, a temperature, and a pressure, and thus an amount of the fed compressible fluid should be adjusted as appropriate.

For example, in a combination of polylactic acid (as the resin) and carbon dioxide (as the compressible fluid), the proportion of the carbon dioxide to the polylactic acid is preferably 2% by mass or more and 30% by mass or less. The proportion (feed amount) of carbon dioxide of 2% by mass or more allows prevention of a defect where a plasticizing effect is limited. The proportion (feed amount) of carbon dioxide of 30% by mass or less allows prevention of a defect where carbon dioxide and polylactic acid are phase-separated to fail to obtain a foam sheet having a uniform thickness.

<Kneading Device>

A kneading device (or kneading part) used in the kneading process can employ either a continuous process that continuously perform a kneading process and a foaming process, or a batch process. Preferably, such a reaction process is suitably selected in consideration of an apparatus efficiency, a property and quality of a products, etc.

Examples of the kneading device include, but are not limited to, single-screw extruders, multi-screw extruders, kneaders, non-screw cage-type stirring tanks, BIVOLAK manufactured by Sumitomo Heavy Industries, Ltd., N-SCR manufactured by Mitsubishi Heavy Industries, Ltd., glasses-like blades and lattice blades manufactured by Hitachi, Ltd., and tube-type polymerization tanks equipped with a Kenix-type or Sulzer-type SMLX static mixer, all of which can handle viscosities suitable for kneading. In terms of color tone, self-cleaning polymerization equipment such as finishers, N-SCR, and twin-screw extruders can be used. Above all, finishers and N-SCR are preferred for resin color tone, stability, and heat resistance. In terms of production efficiency, single-screw extruders and multi-screw extruders are preferable.

«Foaming Process»

The foaming process is a process of expanding a foaming agent to foam a resin composition. In use of a compressible fluid, release of pressure allows expansion and removal of a foaming agent. As for the temperature in the foaming process, it is preferable to heat a resin composition to a temperature at which the resin composition can be plasticized to the extent extrudable.

As driving force to flow the resin composition in the foaming process, a pressure from the aforementioned kneading device may be used, or a mechanical device such as a single or multi-screw extruder or a cylinder may be separately used for the foaming process.

<Other Processes>

Other processes are not particularly limited if being processes performed in common production of a resin foamed sheet, and can be selected as appropriate according to an intended purpose, and examples thereof include, but are not limited to, a shaping process for processing into a sheet shape.

Examples of the shaping process include, but are not limited to, vacuum molding, pressure forming, and press molding. In the present embodiment, a cylindrical master batch is shaped and then formed into a sheet in the shaping process, thereby providing a resin foamed sheet.

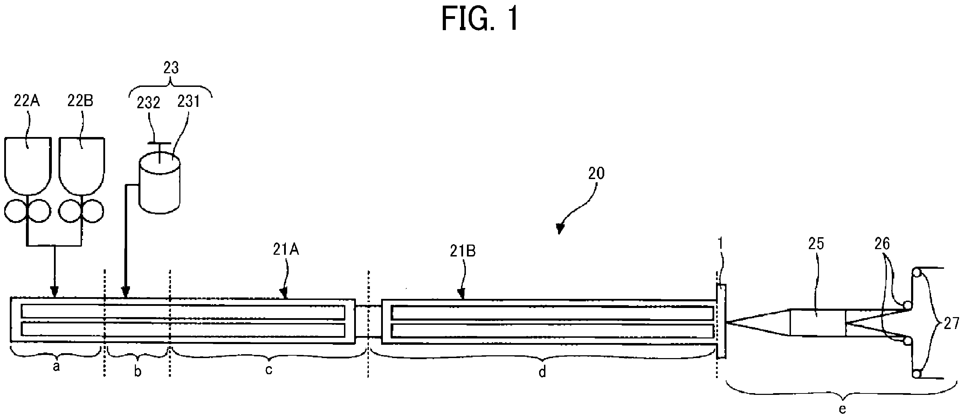

FIG. 1 is a schematic diagram of a resin foam production apparatus for producing a resin foam according to the present embodiment.

A resin foam production apparatus 20 includes a series connection of a first extruder 21A as a kneading device to perform a kneading process, and a second extruder 21B to perform a foaming process.

The tip of the second extruder 21B (at the downstream end in an extrusion direction) has attachment of a die 1, which is a metal mold for extrusion molding, and a resin composition is extruded with foaming from the die 1, thereby shaping a resin foam.

The first extruder 21A has a raw material mixing/melting area a, a compressible fluid feeding area b, and a kneading area c, which is a kneading part, and the second extruder 21B has an extrusion area d.

The first extruder 21A may be a twin-screw extruder (manufactured by The Japan Steel Works, Ltd., screw opening diameter: 42 mm, LID = 48). The second extruder 21B may be a single-screw extruder (screw opening diameter: 70 mm, LID = 46).

<Raw Material Mixing/melting Area>

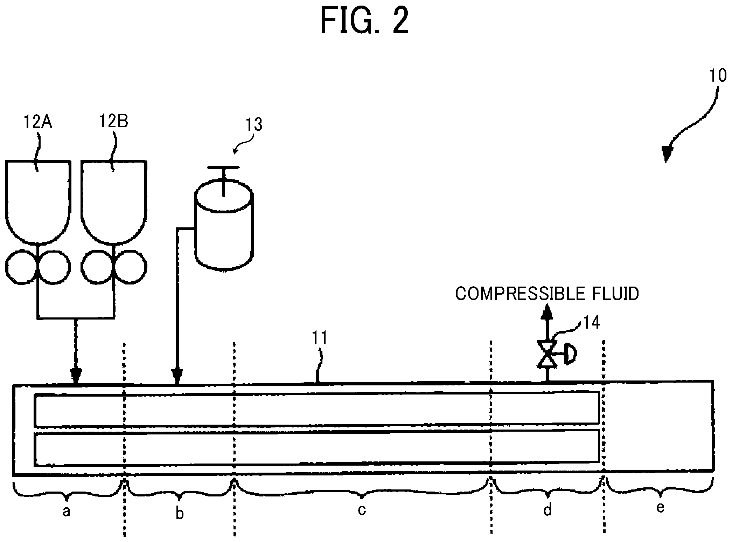

In the raw material mixing/melting area a, a first quantification feeder 22A feeds a filler, and a second quantification feeder 22B feeds a resin material such as polylactic acid. Instead of the filler, the first quantification feeder 22A may feed a master batch produced by a kneading device 10 (see FIG. 2).

<Compressible Fluid Feeding Area>

The compressible fluid feeding area b is coupled to a gas introducer 23. The gas introducer 23 has a gas tank 231 that reserves a compressible fluid containing a foaming agent, and a measuring pump 232 that feeds a defined amount of the compressible fluid in the gas tank 231 into the compressible fluid feeding area b.

In the raw material mixing/melting area a, a resin pellet is melted by heating and wets the filler, thereby preparing a raw material mixture. To the raw material mixture, the compressible fluid containing a foaming agent is fed with the measuring pump 232, thereby plasticizing the melted resin.

<Kneading Area>

The resin composition to which the compressible fluid has been fed in the compressible fluid feeding area b is pushed out to the kneading area c.

The kneading area c is set to a temperature so as to provide viscosity suitable for kneading the filler.

Preset temperature varies depending on a specification of a device, a type of a resin, a structure or molecular weight of a resin, or another item. Thus, without particular limitation, commercially available polylactic acid having a weight-average molecular weight (Mw) of about 200,000 is commonly kneaded at a defined temperature 10 degrees C to 20 degrees C higher than the melting point of polylactic acid. By contrast, kneading together with the compressible fluid allows kneading at a temperature lower than the melting point of polylactic acid. A defined temperature lower than the melting point of a resin allows kneading with relatively high viscosity. In particular, a defined temperature is set to 20 degrees C to 80 degrees C lower, and more preferably 30 degrees C to 60 degrees C lower than the melting point of a resin. Simply, temperature setting can be made with reference to a current value of stirring power of an apparatus or other parameters.

Kneading the resin composition at a temperature lower than the melting point causes increase in kneading efficiency and provides uniformity in foaming speed throughout the resin composition inside the die 1. This allows prevention of generation of a corrugated wrinkle in a part of a shaped resin foam, and also provides a side benefit of hindering deterioration, carbonization, oxidation, and degradation inside the extruders 21A and 21B such as burning and gum.

<Extrusion Area>

The resin composition is kneaded in the kneading area c of the first extruder 21A, and fed into the extrusion area d, which is an extrusion molding part of the second extruder 21B. The tip of the extrusion area d (at the downstream end in an extrusion direction) has attachment of the die 1, which is a metal mold for extrusion molding. When pushed out from the die 1, the resin composition is foamed to generate a cylindrical resin foam.

A defined temperature of the extrusion area d, which performs a foaming process to foam the resin composition, is preferably set such that the resin composition being extruded from the die 1 has a temperature lower than the melting point of the resin. Setting of the resin composition being extruded from the die 1 to have a temperature lower than the melting point of the resin allows thickening of the resin composition, thus providing a resin foam with high expansion ratio.

<Shape Processing Area>

The shape processing area e includes a mandrel 25, which cools a tubular resin foam extruded from the die 1. The tubular resin foam is shaped by causing the tubular resin foam extruded from the die 1 to advance along on the mandrel 25, as well as cooling the outer face with blowing air from an airing. Subsequently, the tubular resin foam thus cooled is cut with a cutter to form a flat sheet, passed through a roller 26, and then wound-up with a wind-up roller 27, thereby providing a foamed sheet.

Next, description will be made for production of a master batch fed by the first quantification feeder 22Ainto the first extruder 21A.

FIG. 2 is a schematic diagram of the kneading device 10 to produce a master batch.

The kneading device 10 includes an extruder 11 such as a twin-screw extruder (manufactured by The Japan Steel Works, Ltd., screw opening diameter: 42 mm, LID = 48). The extruder 11 includes the raw material mixing/melting area a, the compressible fluid feeding area b, the kneading area c, the extrusion area d, and the shape processing area e, in the same manner as the resin foam production apparatus 20 depicted in FIG. 1.

In the raw material mixing/melting area a, a first quantification feeder 12A feeds the filler, and a second quantification feeder 12B feeds a resin material such as polylactic acid. Then, in the compressible fluid feeding area b, a gas introducer 13 feeds a defined amount of the compressible fluid. Subsequently, the mixture is kneaded in the kneading area c, and then pushed out to the extrusion area d.

The extrusion area d has a pressure valve 14. The pressure valve 14 is released to discharge the compressible fluid in the resin composition to the outside, followed by extrusion of the resin composition in a strand shape. The strand-shaped resin composition thus extruded is cooled, then pelleted with a cutter in the shape processing area e, thereby producing a pellet-shaped master batch.

In regard to the expansion ratio of a resin foam, higher expansion ratio leads to better cost-effectiveness. In view of cost, the expansion ratio of a resin foam is preferably 5 times or more, more preferably 10 times or more, more preferably 20 times or more, more preferably 30 times or more, and particularly preferably 40 times or more. Note that in view of reduction in strength, a ratio of 45 times or more causes diminished value as a common resin foam member and limits applications to a packaging material and the like.

High expansion ratio tends to lead to defoaming, thus being more likely to generate a corrugated wrinkle in a resin foam. In application for a packaging material, a corrugated wrinkle might be allowable in an aesthetic view, but should be absent for the purpose of avoiding reduction in stackability.

Meanwhile, in application of a shaped resin foam sheet to be subjected to secondary shaping into e.g., a disposable container and a blister pack, expansion ratio is preferably 1 to 30 times, and more preferably 5 to 20 times. In this application, in addition to need of good appearance including a corrugated wrinkle, bad secondary shaping may also occur due to reduced strength originated from a corrugated wrinkle or poor external appearance. Thus, these defects are not allowable in this application. Accordingly, a sheet with no corrugated wrinkle in an expansion ratio of 5 times or more has industrially high value.

A corrugated wrinkle is known to be more likely to generate with a higher expansion ratio. Accordingly, improvement in a corrugated wrinkle means increase in expansion ratio at which a corrugated wrinkle begins to generate. A desired expansion ratio can be provided by controlling any one or a combination of kneading temperature, residence time, atmosphere temperature, concentration of a foaming agent, type of a foaming agent, uniformity of a foaming agent, molecular weight distribution of a resin, discharge velocity from the die 1, and other parameters.

These expansion ratio control factors can change expansion ratio and thereby indirectly change a corrugated wrinkle, but does not substantially change tolerance for generation of a corrugated wrinkle. While changing expansion ratio with adjusting these factors, the inventors founded primary conditions that impacts on frequency of generation of a corrugated wrinkle and achieved the present embodiment.

In other words, the inventors focused on that in any production apparatus that employs a foaming agent and foams a resin, it is effective and most fundamental for prevention of generation of a corrugated wrinkle to freely control onset of foaming and develop foaming at a designed timing. Examples of methods for controlling foaming include pressure, temperature, duration, atmosphere, concentration of a foaming agent, type, dispersiveness, control of solubility, concentration of a filler, dispersiveness of a filler, and molecular weight distribution of a resin, and these were inclusively, earnestly investigated, thereby revealing the followings.

In a production apparatus of a resin foam that feeds a resin composition containing at least one type of resin, causes the resin composition to pass through a metal mold, and thereby shapes the resin composition, it has been revealed that when, relative to resin pressure Cp1 generated by an extruder located closest to the metal mold, a ratio of resin pressure Cp2 at a foaming part of the metal mold is 0.3 or more, a resin foamed sheet can be provided that combines control of reduction in expansion ratio and hindering of poor external appearance due to a corrugated wrinkle, surface roughness, or another factor.

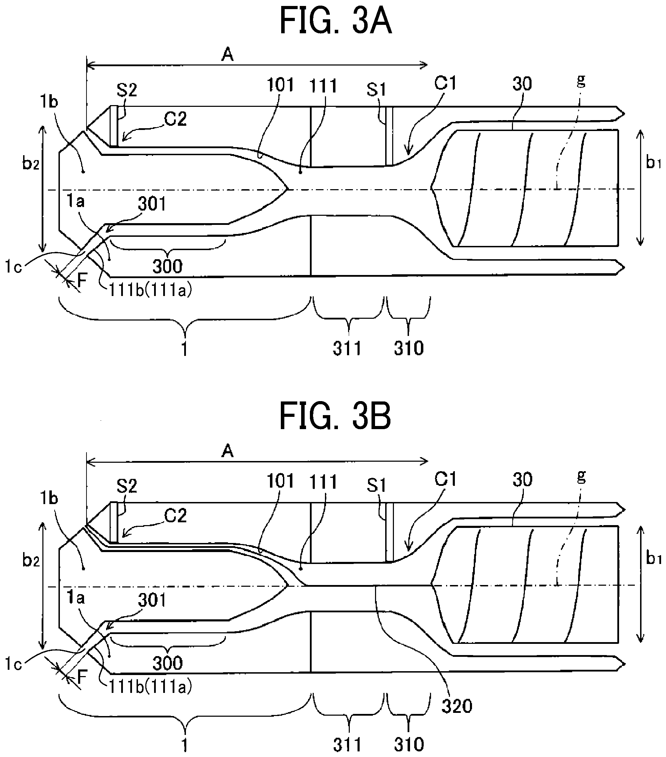

FIGs. 3A and 3B are illustrations of an example of a structure adjacent to the die 1 as a metal mold of the second extruder 21B in the resin foam production apparatus 20 in FIG. 1. The die 1 has an outer die 1a having a through hole 101 that passes through in an extrusion direction of a resin composition (a direction from the right side to the left side in FIGs. 3A and 3B), and an inner die 1b disposed inside the through hole 101 of the outer die 1a, and both dies form an annular resin flow path 111. The resin flow path 111 has a straight part 300 running straight in the vicinity of an extrusion screw 30 located closest to the die 1. The resin flow path 111 curves from a terminal end and reaches an annular extrusion opening. An extrusion flow path part 111b is from an inflection point to an extrusion opening 1c. The straight part 300 feeds a resin into this extrusion flow path part 111b and thus represents a feeding flow path part 111a.

Resin pressure Cp1 generated by the extrusion screw 30 is resin pressure at a single-screw outlet part indicated by a symbol C1 in the drawings, and resin pressure Cp2 at a foaming part of the die 1 is resin pressure in the vicinity of an inflection point of a feeding flow path indicated by a symbol C2 in the drawings.

The single-screw outlet part is a tip part of a screw of a single-screw. A discharge part 310 has an inner diameter decreasing first on a way from the tip part to the straight part 300 within the die 1, and a region 311 has an approximately constant inner diameter; the inner diameter of the outer die 1a increases from the region 311 having an approximately constant inner diameter toward the straight part 300. Pressure is approximately constant from the single-screw outlet part to the discharge part 310 (up to the region 311). S1 in the discharge part 310 depicted in the drawings indicates an introduction bore passed through from a circumferential wall to a flow path for introducing a probe for measuring resin pressure of the single-screw outlet part C1. A manometer having the probe is attached to a circumferential wall part with screwing or other techniques. S2 depicted in the drawings indicates an introduction bore for introducing a probe for measuring resin pressure at the foaming part C2 of the die 1. The bore is formed at a site closest to the extrusion opening 1c in the straight part 300. Attachment is made to the circumferential wall part with screwing or another technique in the same manner.

A symbol A in FIG. 3A indicates mean flow distance from the tip of the extrusion screw 30, which is a single-screw outlet, to the extrusion opening 1c. FIG. 3B depicts a particular flow path route 320 by a solid line to measure the mean flow distance. A length of the route that starts from the screw tip of the single-screw and passes the center of the resin flow path having a width in a cross-sectional in the drawings is defined as mean flow distance. A symbol b1 indicates an extrusion screw diameter, and a symbol b2 indicates an extrusion caliber. The extrusion caliber b2 is defined as a diameter of the center of the extrusion opening 1c in a direction perpendicular to an extrusion central axis g in a cross-section of the drawings.

When a ratio of resin pressure Cp2 relative to resin pressure Cp1 is 0.3 or more, increase in flow resistance of a resin composition just before foaming may have allowed retention of internal pressure of a metal mold, thereby preventing abnormal foaming within the metal mold. Resin pressure Cp2 inside the die 1 is a parameter generated by combination of a structure of a die outlet part and pressure loss in the die 1 from resin pressure Cp 1 of the single-screw outlet part. The inventors found that increase in resin pressure Cp2 and reduction in resin pressure Cp1 are primary conditions for production of a form without corrugation.

As a material for the metal mold, SCM440 plated with chromium and finished with heat treatment may be used, and a metallic material such as S45C, S50C, SS400, SCM440, SUS316, SUS304, and HPM38 are acceptable. For the purpose of improving durability, various plating other than hard chromium plating may be applied. Alternatively, for improving thermal conductivity or another purpose, C2810, A5052, alumina, or another material may be selected, or ceramic thermal spraying or another technique may be applied. Silica glass, sapphire glass, borosilicate glass, or another glass may be used for analysis, or finishing may be made with application with a release agent for the purpose of improving mold releasability, or otherwise, a geometric pattern may be transferred. A resin metal mold formed of polycarbonate, an acrylic resin, PEEK, or another resin is acceptable. Additionally, use of a metal mold having a variable structure of the metal mold is also acceptable. Even use of these material applied with fluorine coating, fluorine impregnation or inclusion allows exertion of an effect of the present embodiment. A common method of controlling a surface shape is removal processing by shot blasting, but is not limited thereto, and may be based on not only removal processing such as cutting, electrical discharge machining, or etching, but also a processing method such as CVD or PVD.

Additionally, when the screw diameter b 1 of an extruder located closest to the metal mold and the caliber b2 of the discharge part 310 of the metal mold satisfy a relation of b 1 > 40 + 0.5 * b2, pressure loss from the straight part 300 to the discharge part 310 can be prevented, in addition to the aforementioned effects, thus hindering an event where a scratch streak (surface roughness) is generated on the surface of a resin composition when the composition flows. In particular, the upper limit of expansion ratio resulting in no corrugated wrinkle can be 5.9 times as indicated in Example 2 in Table 1 described later.

In addition, when a cross-sectional area F of a flow path opening (i.e., the extrusion opening 1c of the extrusion flow path part 1 1 1b) (hereinafter "flow path opening cross-sectional area F") is 0.020 times or less of a cross-sectional area of the screw (hereinafter "screw cross-sectional area) ($\pi(b11)^2$), output speed of a resin at the discharge part 310 can be increased and allow the resin to flow without inhibiting forming of the resin, thereby providing improvement in expansion ratio and hindering of defoaming.

In particular, the upper limit of expansion ratio with no corrugated wrinkle can be 8.3 times as indicated in Example 3 in Table 1 described later.

The flow path opening cross-sectional area F can be derived by analytic calculation. When analytic calculation is difficult, a cross-sectional area may be derived by actual measurement of a cross-section by a method such as three-dimensional CAD.

Additionally, when the mean flow distance A from a site of a resin composition extruded to the air to an extrusion screw is 500 mm or less, friction of a resin can be reduced inside the metal mold, thus hindering an event where a scratch streak is generated on the surface of a resin composition when the composition flows. In particular, the upper limit of expansion ratio with no corrugated wrinkle can be 6.1 times as indicated in Example 4 in Table 1 described later.

Moreover, it is preferable to undergo an extrusion molding process that in presence of a compressible fluid, extrudes the resin composition at a temperature lower than the melting point of the at least one type of resin and provide a resin foam. Low temperature allows thickening of a resin composition, thus providing a foam with high expansion ratio.

Furthermore, as mentioned above, it is preferable to undergo a kneading process that in presence of a compressible fluid, kneads at least one type of resin at a temperature lower than the melting point of the resin and provides a resin composition. In kneading at the melting point or higher, a corrugated wrinkle was partially generated. Low temperature causes increase in kneading efficiency and thus provides uniformity in foaming speed throughout the resin composition inside the metal mold, thereby allowing prevention of partial generation of a corrugated wrinkle. Low temperature also provides a side benefit of hindering deterioration, carbonization, oxidation, and degradation inside an extruder such as burning and gum.

Furthermore, it is preferable to undergo a process that feeds a composition containing 90% by mass or more of polylactic acid to the metal mold. This allows provision of a production apparatus that provides a resin foam having biodegradability.

Next, description will be made for assessment tests performed by the inventors.

Description will be first made for production of a resin foamed sheet to be used in the assessment.

<Production of Resin Foamed sheet>

For production of a resin foamed sheet, the resin foam production apparatus 20 depicted in FIG. 1 and FIGs. 3A and 3B was used. The first extruder 21A in the resin foam production apparatus 20 and a twin-screw extruder (manufactured by The Japan Steel Works, Ltd., screw opening diameter: 42 mm, L/D = 48) as the second extruder 21B were used. The die 1 was attached to the downstream end in an extrusion direction of the second extruder 21B, and a sheet-shaped resin foam was produced, followed by assessment of presence or absence of a corrugated wrinkle. The dies 1 in Example 1-4 and Comparative Example 1-4 have an outer diameter of 70 mm and material quality of SCM440 plated with chromium.

Assessments were performed with changing various conditions in Examples 1-4 and Comparative Examples 1-4 described later.

Using the kneading device 10 depicted in FIG. 2, a filler master batch with 3% by mass of a filler was produced. The master batch was set in the first quantification feeder 22A in the resin foam production apparatus 20 depicted in FIG. 1. The master batch was fed at 1.67 kg/hr per unit time from the first quantification feeder 22A to the raw material mixing/melting area a in the first extruder 21A. Moreover, a polylactic resin (Revode110, manufactured by Zhejiang Hisun Biomaterials Co., Ltd., melting point: 160 degrees C) was fed at 8.33 kg/hr per unit time from the second quantification feeder 22B to the raw material mixing/melting area a. This provides a resin composition containing 90% by mass or more of polylactic acid.

In the compressible fluid feeding area b, carbon dioxide was fed as a compressible fluid.

The resin composition fed with the compressible fluid was kneaded in the kneading area c of the first extruder 21A, and fed into the extrusion area d of the second extruder 21B. In the extrusion flow path part 111b of the die 1, the compressible fluid was removed from the resin composition kneaded in the extrusion area d, thereby providing a foam thus extruded and foamed. An amount of the resin composition discharged from the die 1 was 10 kg/h, and temperature of the resin composition extruded from the die 1 was 150 degrees C.

Temperatures of the raw material mixing/melting area a and the compressible fluid feeding area b in the first extruder 21A were set to 190 degrees C. Temperature of the kneading area c in the first extruder 21A was set to 150 degrees C, which is 10 degrees C lower than the melting-point temperature of polylactic acid (160 degrees C). Temperature of the extrusion area d in the second extruder 21B was set so that a resin composition extruded from the die 1 has a temperature of about 150 degrees C or lower. Pressures from the compressible fluid feeding area b to the kneading area c and to the extrusion area d in the second extruder 21B (more exactly, a feeding flow path part 111a of the die 1) were set to 7.0 MPa or more.

«Assessment Method of Foam»

<Expansion Ratio>

Expansion ratio of a resin foam can be derived by dividing the density of a composition of a resin foam (true density $\rho 0$) by bulk density ($\rho 1$), as the following formula (*):

$$\text{Expansion ratio} = \text{True density } (\rho 0) \, / \, \text{Bulk density } (\rho 1) \, ... \, (*)$$

The true density herein is a density of a resin composition remaining as a final resin composition, and a literature value and an actual measurement value of non-foamed pellet are acceptable. Polylactic acid has a true density of approximately 1.25 g/cm$^3$.

Bulk density is derived by measurement. A method of measuring bulk density is not particularly limited, and can appropriately employ any method of measuring bulk density. For example, bulk density can be measured by a method described below. A foamed sheet is left under an environment at a temperature of 23 degrees C and a relative humidity of 50% for 24 hours or more and then measured for external dimensions, thereby deriving bulk volume. Subsequently, the weight of the foamed sheet is measured. Bulk density of the foamed sheet is derived by dividing the weight of the foamed sheet by the bulk volume.

<Assessment of Corrugated Wrinkle>

In assessment for a corrugated wrinkle, presence or absence of generation of a corrugated wrinkle was checked by visual observation of a surface, a cross-section, and other views. Since it is preferable that no corrugation be generated, an assessment item was the range of expansion ratio leading to generation of corrugation in change of expansion ratio by any of the aforementioned methods, rather than a method of quantifying corrugation. In assessment of foam surface roughness, defoaming marks, and other characteristics, check was made by visual observation. No matter what criteria is employed, no significant discrepancy would be caused in relative dominant-subdominant relation, thus providing no concern for evaluating an effect of the present embodiment.

<Example 1>

Example 1 employed a metal mold having Cp2/Cp1 of 0.33, b1 of 70 mm, b2 of 76 mm, a flow path opening cross-sectional area F with 0.03 times of a screw cross-section, and a mean flow distance A of 550 mm. When an amount of the fed compressible fluid and metal mold temperature were intentionally changed to provide a foam having altered expansion ratio, no corrugated wrinkle was observed in foams expanded 1-5.2 times, thus providing good foams. Furthermore, when a foamed sheet is provided with the highest expansion ratio within a range not causing generation of a corrugated wrinkle, no roughness or defoaming marks were observed on the surface of a foam.

<Example 2>

Example 2 employed a metal mold having Cp2/Cp1 of 0.3, b1 of 70 mm, b2 of 40 mm, a flow path opening cross-sectional area F with 0.023 times of a screw cross-section, and a mean flow distance A of 550 mm. When an amount of the fed compressible fluid and metal mold temperature were intentionally changed to provide a foam having altered expansion ratio, no corrugated wrinkle was observed in foams expanded 1-5.9 times, thus providing good foams. Furthermore, when a foamed sheet is provided with the highest expansion ratio within a range not causing generation of a corrugated wrinkle, no roughness or defoaming marks were observed on the surface of a foam.

<Example 3>

Example 3 employed a metal mold having Cp2/Cp1 of 0.34, b1 of 70 mm, b2 of 76 mm, a flow path opening cross-sectional area F with 0.019 times of a screw cross-section, and a mean flow distance A of 550 mm. When an amount of the fed compressible fluid and metal mold temperature were intentionally changed to provide a foam having altered expansion ratio, no corrugated wrinkle was observed in foams expanded 1-8.3 times, thus providing good foams. Furthermore, when a foamed sheet is provided with the highest expansion ratio within a range not causing generation of a corrugated wrinkle, no roughness or defoaming marks were observed on the surface of a foam.

<Example 4>

Example 4 employed a metal mold having Cp2/Cp1 of 0.33, b1 of 70 mm, b2 of 76 mm, a flow path opening cross-sectional area F with 0.031 times of a screw cross-section, and a mean flow distance A of 450 mm. When an amount of the fed compressible fluid and metal mold temperature were intentionally changed to provide a foam having altered expansion ratio, no corrugated wrinkle was observed in foams expanded 1-6.1 times, thus providing good foams. Furthermore, when a foamed sheet is provided with the highest expansion ratio within a range not causing generation of a corrugated wrinkle, no roughness or defoaming marks were observed on the surface of a foam.

<Comparative Example 1>

Comparative Example 1 employed a metal mold having Cp2/Cp1 of 0.26, b1 of 70 mm, b2 of 40 mm, a flow path opening cross-sectional area F with 0.023 times of a screw cross-section, and a mean flow distance A of 550 mm. When an amount of the fed compressible fluid and metal mold temperature were intentionally changed to provide a foam having altered expansion ratio, no corrugated wrinkle was observed in foams expanded 1-2.7 times, thus providing good foams. Furthermore, when a foamed sheet is provided with the highest expansion ratio within a range not causing generation of a corrugated wrinkle, roughness or defoaming marks were observed on the surface of a foam.

<Comparative Example 2>

Comparative Example 2 employed a metal mold having Cp2/Cp1 of 0.25, b1 of 70 mm, b2 of 76 mm, a flow path opening cross-sectional area F with 0.031 times of a screw cross-section, and a mean flow distance A of 550 mm. When an amount of the fed compressible fluid and metal mold temperature were intentionally changed to provide a foam having altered expansion ratio, no corrugated wrinkle was observed in foams expanded 1-1.8 times, thus providing good foams. Furthermore, when a foamed sheet is provided with the highest expansion ratio within a range not causing generation of a corrugated wrinkle, no roughness or defoaming marks were observed on the surface of a foam.

<Comparative Example 3>

Comparative Example 3 employed a metal mold having Cp2/Cp1 of 0.2, b1 of 70 mm, b2 of 76 mm, a flow path opening cross-sectional area F with 0.019 times of a screw cross-section, and a mean flow distance A of 450 mm. When an amount of the fed compressible fluid and metal mold temperature were intentionally changed to provide a foam having altered expansion ratio, no corrugated wrinkle was observed in foams expanded 1-2.5 times, thus providing good foams. Furthermore, when a foamed sheet is provided with the highest expansion ratio within a range not causing generation of a corrugated wrinkle, roughness or defoaming marks were observed on the surface of a foam.

<Comparative Example 4>

Comparative Example 4 employed a metal mold having Cp2/Cp1 of 0.25, b1 of 70 mm, b2 of 76 mm, a flow path opening cross-sectional area F with 0.031 times of a screw cross-section, and a mean flow distance A of 550 mm. When an amount of the fed compressible fluid and metal mold temperature were intentionally changed to provide a foam having altered expansion ratio, no corrugated wrinkle was observed in foams expanded 1-1.7 times, thus providing good foams. Furthermore, when a foamed sheet is provided with the highest expansion ratio within a range not causing generation of a corrugated wrinkle, no roughness or defoaming marks were observed on the surface of a foam.

Table 1 is a table summarizing Examples and Comparative Examples described above.

Table 1

| | Cp2/Cp1 | b1, b2, 40+0.5b2 | Times (of screw cross-section) | Mean distance a | Ratio with no corrugated wrinkle | Absence of roughness and defoaming |
|---|---|---|---|---|---|---|
| Example 1 | 0.33 | 70, 76, 78 | 0.031 | 550 | 1-5.2 | Yes |
| Example 2 | 0.30 | 70, 40, 60 | 0.023 | 550 | 1-5.9 | Yes |
| Example 3 | 0.34 | 70, 76, 78 | 0.019 | 550 | 1-8.3 | Yes |
| Example 4 | 0.33 | 70, 76, 78 | 0.031 | 450 | 1-6.1 | Yes |
| Comparative Example 1 | 0.26 | 70, 40, 60 | 0.023 | 550 | 1-2.7 | No |
| Comparative Example 2 | 0.25 | 70, 76, 78 | 0.031 | 550 | 1-1.8 | Yes |
| Comparative Example 3 | 0.20 | 70, 76, 78 | 0.019 | 450 | 1-2.5 | No |
| Comparative Example 4 | 0.25 | 70, 76, 78 | 0.031 | 550 | 1-1.7 | Yes |

These assessments have been described with reference to assessments for an apparatus where an extrusion opening and a resin flow path form a resin composition circularly in a cross-section perpendicular to the extrusion central axis g and extrude the resin composition tubularly from the extrusion opening, but is not limited thereto. The present embodiment can also be applied to, e.g., a die where an extrusion opening and a resin flow path extrude a hollow resin composition rectangularly or annularly in a cross-section perpendicular to an extrusion central axis.

Additionally, it is preferable to use a material containing 90% by mass or more of polylactic acid as a resin foamable composition to be passed through a metal mold in order to provide a resin foam (foamed plastic) having biodegradability, as described above. A content ratio of polylactic acid can be calculated from a ratio of a material to be prepared. With a ratio of the material being unknown, or for measurement of a content ratio of polylactic acid in a produced resin foam, the content ratio of polylactic acid can be measured using the following measuring methods. For example, the GCMS analysis as below can identify a component by comparison with a known polylactic acid as a standard sample. As appropriate, calculation can also be made in combination with area ratio of spectra by NMR analysis and another analysis method.

Measurements with GCMS analysis can employ the following instruments and measuring methods:

- GC-MS: QP2010 manufactured by Shimadzu Corporation, auxiliary equipment: Py3030D manufactured by Frontier Laboratories Ltd.
- Separation column: Ultra ALLOY UA5-30M-0.25F manufactured by Frontier Laboratories Ltd.
- Sample heating temperature: 300 degrees C
- Column oven temperature: 50 degrees C (hold for 1 minute) -> temperature rise at 15 degrees C/ min -> 320 degrees C (6 minutes)
- Ionization method: Electron Ionization (E.I.) method
- Detected mass range: 25 to 700 (m/z).

Supplementally, with regard to a content ratio of polylactic acid in a foamed sheet, for example, a ratio of polylactic acid in the foamed sheet can be derived by performing gas chromatography mass spectrometry (GC-MS) and deriving in advance a calibration curve with a known polylactic acid as a standard sample. At that time, when library search of mass spectra assigns an organic nucleating agent, creation of a calibration curve also allows quantification of an additive amount. As appropriate, calculation can also be made in combination with area ratio of spectra by NMR analysis and another analysis method.

**Claims**

1. A resin foam production apparatus (20) comprising:

   a metal mold (1) including a foaming part (C2) and a discharge part (310); and
   an extruder (11, 21A, 21B) configured to feed a resin foamable composition into the metal mold (1) to cause the resin foamable composition to pass through the discharge part (310), the resin foamable composition comprising at least one type of resin,
   wherein the resin foam production apparatus (20) is configured to cause a ratio of resin pressure Cp2 at the foaming part (C2) of the metal mold (1) relative to resin pressure Cp1 generated by the extruder (11, 21A, 21B) to be 0.3 or more,

   **characterized in that**
   the following relation is satisfied:

   $$b1 > 40 + 0.5 * b2$$

   where b1 (unit: mm) represents a diameter of a screw (30) of the extruder (11, 21A, 21B) and b2 (unit: mm) indicates an extrusion caliber and represents an outer diameter of the discharge part (310) of the metal mold (1).

2. The resin foam production apparatus (20) according to claim 1, wherein, in a direction perpendicular to a resin flow path, a cross-sectional area (F) of a flow path opening (1c) is 0.020 times or less of a cross-sectional area of the screw (30).

3. The resin foam production apparatus (20) according to claim 2, wherein a mean flow distance from a site of the resin foamable composition extruded to air to the screw (30) is 500 mm or less.

4. The resin foam production apparatus (20) according to any one of claims 1 to 3, wherein the extruder (11, 21A, 21B) includes a kneading part (c) configured to knead the at least one type of resin at a temperature lower than a melting point of the resin in presence of a compressible fluid, to provide the resin foamable composition to be fed to the metal mold (1).

5. The resin foam production apparatus (20) according to any one of claims 1 to 3, wherein the extruder (11, 21A, 21B) includes an extrusion molding part (d) configured to extrude the resin foamable composition from the discharge part (310) of the metal mold (1) at a temperature lower than a melting point of the at least one type of resin in presence of a compressible fluid, to provide a resin foam.

6. A method of producing a resin foam, the method comprising:

feeding a resin foamable composition into a metal mold (1) including a foaming part (C2) and a discharge part (310), to cause the resin foamable composition to pass through the discharge part (310), the resin foamable composition comprising at least one type of resin,
wherein a ratio of resin pressure Cp2 at the foaming part (C2) of the metal mold (1) relative to resin pressure Cp1 generated by an extruder (11, 21A, 21B) is 0.3 or more **characterized in that**
the following relation is satisfied:

$$b1 > 40 + 0.5 * b2$$

where b1 (unit: mm) represents a diameter of a screw (30) of the extruder (11, 21A, 21B) and b2 (unit: mm) indicates an extrusion caliber and represents an outer diameter of the discharge part (310) of the metal mold (1).

7. The method of producing a resin foam according to claim 8, wherein the resin foamable composition comprises 90% by mass or more of polylactic acid.

8. The method of producing a resin foam according to claim 6, wherein the resin foam comprises 90% by mass or more of polylactic acid.

**Patentansprüche**

1. Harzschaumherstellungsvorrichtung (20), umfassend:

eine Metallform (1) mit einem Schäumteil (C2) und einem Auslaufteil (310); und
einen Extruder (11, 21A, 21B), der so konfiguriert ist, dass er eine schäumbare Harzzusammensetzung in die Metallform (1) zuführt, um zu bewirken, dass die schäumbare Harzzusammensetzung durch das Auslaufteil (310) hindurchgeht, wobei die schäumbare Harzzusammensetzung mindestens eine Art von Harz umfasst, wobei die Harzschaumherstellungsvorrichtung (20) so konfiguriert ist, dass sie bewirkt, dass ein Verhältnis eines Harzdrucks Cp2 am Schäumteil (C2) der Metallform (1) relativ zu einem Harzdruck Cp1, der durch den Extruder (11, 21A, 21B) erzeugt wird, 0,3 oder mehr beträgt,

**dadurch gekennzeichnet, dass**
die folgende Beziehung erfüllt ist:

$$b1 > 40 + 0,5 * b2$$

wobei b1 (Einheit: mm) einen Durchmesser einer Schnecke (30) des Extruders (11, 21A, 21B) darstellt und b2 (Einheit: mm) ein Extrusionskaliber angibt und einen Außendurchmesser des Auslaufteils (310) der Metallform (1) darstellt.

2. Harzschaumherstellungsvorrichtung (20) nach Anspruch 1, wobei in einer Richtung senkrecht zu einem Harzströmungsweg eine Querschnittsfläche (F) einer Strömungswegöffnung (1c) das 0,020-fache oder weniger einer Querschnittsfläche der Schnecke (30) beträgt.

3. Harzschaumherstellungsvorrichtung (20) nach Anspruch 2, wobei eine mittlere Strömungsdistanz von einer Stelle der zu Luft extrudierten schäumbaren Harzzusammensetzung zur Schnecke (30) 500 mm oder weniger beträgt.

4. Harzschaumherstellungsvorrichtung (20) nach einem der Ansprüche 1 bis 3, wobei der Extruder (11, 21A, 21B) ein Knetteil (c) enthält, das so konfiguriert ist, dass es die mindestens eine Art von Harz bei einer Temperatur, die niedriger als der Schmelzpunkt des Harzes ist, in Gegenwart eines komprimierbaren Fluids knetet, um die schäumbare Harzzusammensetzung bereitzustellen, die der Metallform (1) zugeführt werden soll.

5. Harzschaumherstellungsvorrichtung (20) nach einem der Ansprüche 1 bis 3, wobei der Extruder (11, 21A, 21B) ein Extrusionsformteil (d) enthält, das so konfiguriert ist, dass es die schäumbare Harzzusammensetzung aus dem Auslaufteil (310) der Metallform (1) bei einer Temperatur, die niedriger als der Schmelzpunkt der mindestens einen Art von Harz ist, in Gegenwart eines komprimierbaren Fluids extrudiert, um einen Harzschaum bereitzustellen.

6. Verfahren zur Herstellung eines Harzschaums, wobei das Verfahren umfasst:

Zuführen einer schäumbaren Harzzusammensetzung in eine Metallform (1), die ein Schäumteil (C2) und ein Auslaufteil (310) enthält, um zu bewirken, dass die schäumbare Harzzusammensetzung durch das Auslaufteil (310) hindurchgeht, wobei die schäumbare Harzzusammensetzung mindestens eine Art von Harz umfasst, wobei ein Verhältnis eines Harzdrucks Cp2 am Schäumteil (C2) der Metallform (1) relativ zu einem Harzdruck Cp1, der von einem Extruder (11, 21A, 21B) erzeugt wird, 0,3 oder mehr beträgt,

**dadurch gekennzeichnet, dass**
die folgende Beziehung erfüllt ist:

$$b1 > 40 + 0,5 * b2$$

wobei b1 (Einheit: mm) einen Durchmesser einer Schnecke (30) des Extruders (11, 21A, 21B) darstellt und b2 (Einheit: mm) ein Extrusionskaliber angibt und einen Außendurchmesser des Auslaufteils (310) der Metallform (1) darstellt.

7. Verfahren zur Herstellung eines Harzschaums nach Anspruch 8, wobei die schäumbare Harzzusammensetzung 90 Massenprozent oder mehr Polymilchsäure umfasst.

8. Verfahren zur Herstellung eines Harzschaums nach Anspruch 6, wobei der Harzschaum 90 Massenprozent oder mehr Polymilchsäure umfasst.


**Revendications**

1. Appareil de production de mousse de résine (20) comprenant :

un moule en métal (1) incluant une partie moussante (C2) et une partie de décharge (310) ; et une extrudeuse (11, 21A, 21B) configurée pour introduire une composition de résine moussable dans le moule en métal (1) afin d'amener la composition de résine moussable à traverser la partie de décharge (310), la composition de résine moussable comprenant au moins un type de résine, dans lequel l'appareil de production de mousse de résine (20) est configuré pour amener un rapport de pression de résine Cp2 au niveau de la partie moussante (C2) du moule en métal (1) par rapport à une pression de résine Cp1 générée par l'extrudeuse (11, 21A, 21B) à être supérieur ou égal à 0,3,

**caractérisé en ce que**
la relation suivante est satisfaite :

$$b1 > 40 + 0,5 * b2$$

où b1 (unité : mm) représente un diamètre d'une vis (30) de l'extrudeuse (11, 21A, 21B) et b2 (unité : mm) indique un calibre d'extrusion et représente un diamètre extérieur de la partie de décharge (310) du moule en métal (1).

2. Appareil de production de mousse de résine (20) selon la revendication 1, dans lequel, dans une direction perpendiculaire à un trajet d'écoulement de résine, une aire de section transversale (F) d'une ouverture de trajet d'écoulement (1c) est inférieure ou égale à 0,020 fois une aire de section transversale de la vis (30).

3. Appareil de production de mousse de résine (20) selon la revendication 2, dans lequel une distance d'écoulement moyenne à partir d'un site de la composition de résine moussable extrudée à l'air jusqu'à la vis (30) est inférieure ou égale à 500 mm.

4. Appareil de production de mousse de résine (20) selon l'une quelconque des revendications 1 à 3, dans lequel l'extrudeuse (11, 21A, 21B) inclut une partie de malaxage (c) configurée pour malaxer l'au moins un type de résine à une température inférieure à un point de fusion de la résine en présence d'un fluide compressible, afin de fournir la composition de résine moussable à introduire dans le moule en métal (1).

5. Appareil de production de mousse de résine (20) selon l'une quelconque des revendications 1 à 3, dans lequel l'extrudeuse (11, 21A, 21B) inclut une partie de moulage par extrusion (d) configurée pour extruder la composition de résine moussable à partir de la partie de décharge (310) du moule en métal (1) à une température inférieure à un point de fusion de l'au moins un type de résine en présence d'un fluide compressible, afin de fournir une mousse de résine.

6. Procédé de production d'une mousse de résine, le procédé comprenant :

l'introduction d'une composition de résine moussable dans un moule en métal (1) incluant une partie moussante (C2) et une partie de décharge (310), afin d'amener la composition de résine moussable à traverser la partie de décharge (310), la composition de résine moussable comprenant au moins un type de résine, dans lequel un rapport de pression de résine Cp2 au niveau de la partie moussante (C2) du moule en métal (1) par rapport à une pression de résine Cp1 générée par une extrudeuse (11, 21A, 21B) est supérieur ou égal à 0,3

**caractérisé en ce que**
la relation suivante est satisfaite :

$$b1 > 40 + 0{,}5 * b2$$

où b1 (unité : mm) représente un diamètre d'une vis (30) de l'extrudeuse (11, 21A, 21B) et b2 (unité : mm) indique un calibre d'extrusion et représente un diamètre extérieur de la partie de décharge (310) du moule en métal (1).

7. Procédé de production d'une mousse de résine selon la revendication 8, dans lequel la composition de résine moussable comprend au moins 90 % en masse de polyacide lactique.

8. Procédé de production d'une mousse de résine selon la revendication 6, dans lequel la mousse de résine comprend au moins 90 % en masse de polyacide lactique.

FIG. 1

EP 4 252 997 B1

FIG. 2

# FIG. 3A

# FIG. 3B

**EP 4 252 997 B1**

**REFERENCES CITED IN THE DESCRIPTION**

**Patent documents cited in the description**

- JP 5123021 B
- US 2002036363 A1
- JP 2002201301 A